# FASCICULE DE BREVET EUROPEEN

(11) **EP 2 536 318 B1**
(45) Date de publication et mention de la délivrance du brevet: **07.05.2014**
(21) Numéro de dépôt: 11702477.8
(22) Date de dépôt: 10.02.2011
(51) Int. Cl.: A47J 31/54

(54) **CHAUDIÈRE BI-PUISSANCE ET APPAREIL ÉLECTROMÉNAGER COMPRENANT UNE TELLE CHAUDIÈRE**
ERHITZER MIT DOPPELBETRIEB UND ELKTROHAUSHALTSGERÄT MIT EINEM DERARTIGEN ERHITZER
DUAL-POWER BOILER AND ELECTRICAL HOUSEHOLD APPLIANCE INCLUDING SUCH A BOILER

(30) Priorité: 15.02.2010 FR 1051008
(43) Date de publication de la demande: 26.12.2012
(73) Titulaire: SEB S.A., 69130 Ecully (FR)
(72) Inventeur: GUEGAN, Laurent, 74150 Lornay (FR); PERRIER, Matthieu, 26000 Valence (FR)
(74) Mandataire: Bourrières, Patrice
(86) Numéro de dépôt international: PCT/EP2011/051979
(87) Numéro de publication internationale: WO 2011/098529

(56) Documents cités:
- EP-A1- 1 774 884
- WO-A1-2006/015524
- DE-A1-102004 062 746
- GB-A- 1 253 893

## Description

La présente invention se rapporte au domaine technique général des appareils électroménagers comprenant une chaudière prévue pour la production d'eau chaude et de vapeur.

La présente invention concerne plus particulièrement les appareils électroménagers de préparation culinaire ou de préparation de boissons comportant une telle chaudière, prévus notamment pour la réalisation de laits végétaux.

Il est connu du document EP1076503 de réaliser une chaudière de type bouilleur pour appareil électroménager comprenant une chambre d'ébullition associée à un élément chauffant. Un tube d'admission d'eau présente une entrée reliée à un réservoir d'eau par l'intermédiaire d'un conduit comportant un clapet anti-retour. Un tube ascendant d'évacuation de l'eau chauffée comprend une partie inférieure dont l'extrémité est disposée à proximité du fond de la chambre d'ébullition, et une partie supérieure émergeant hors de la chambre. Le tube d'évacuation est vertical et présente dans la chambre d'ébullition une ouverture à proximité du plafond de ladite chambre. Une telle chaudière présente l'avantage d'être économique à réaliser car l'alimentation en eau de la chambre se fait par gravité depuis le réservoir et ne nécessite pas de pompe. Cependant, une telle chaudière ne fonctionne que selon un mode eau chaude et n'est pas prévue pour fonctionner selon un mode de production de vapeur. De plus, l'élément chauffant disposé sous la chaudière ne permet pas d'avoir une surface d'échange importante avec l'eau pour une mise en chauffe rapide et une production importante d'eau chaude et de vapeur.

Un but de la présente invention est de remédier aux inconvénients précités et de proposer, dans un appareil électroménager, une chaudière permettant de fonctionner selon deux modes distincts : un premier mode production d'eau chaude et un deuxième mode production de vapeur, pour une production rapide et importante d'eau chaude et de vapeur.

Un autre but de la présente invention est de proposer, dans un appareil électroménager, une chaudière pour la production d'eau chaude ou de vapeur qui présente une conception très simple et qui soit économique à mettre en oeuvre.

Un autre but de la présente invention est de proposer, dans un appareil électroménager, une chaudière pour la production d'eau chaude ou de vapeur, fiable et qui fonctionne en toute sécurité.

Un autre but de l'invention est de proposer un appareil électroménager comportant une chaudière du type précité.

Ces buts sont atteints avec une chaudière pour appareil électroménager comportant une chambre d'ébullition associée à des moyens de chauffe, des moyens de commande desdits moyens de chauffe, une alimentation en eau de la chambre par gravité à partir d'un réservoir, une sortie, les moyens de commande pilotant les moyens de chauffe selon un premier mode de fonctionnement pour fournir majoritairement de l'eau chaude à la sortie de la chaudière et selon un deuxième mode de fonctionnement pour fournir majoritairement de la vapeur à la sortie de la chaudière.

Une telle chaudière permet de produire, selon deux modes distincts d'alimentation électrique des moyens de chauffe, soit de l'eau chaude, soit de la vapeur. L'alimentation en eau par gravité de la chambre permet d'éviter l'utilisation de composants onéreux du type pompe et d'avoir une conception simple et économique. L'absence de composants électriques du type pompe ou électrovanne comportant des pièces en mouvement permet d'obtenir une chaudière très fiable.

Avantageusement, la chambre d'ébullition comprend un fond et une paroi verticale dont la surface est supérieure à la surface du fond de la chambre, les moyens de chauffe étant rapportés sur ladite paroi verticale.

Cette disposition permet, dans une chaudière alimentée en eau par gravité, d'obtenir une surface d'échange importante entre les moyens de chauffe et l'eau pour obtenir une production rapide et importante d'eau chaude ou de vapeur.

De plus, cette disposition permet d'obtenir une chambre verticale de forme allongée bien adaptée à produire des petites salves d'eau chaude. La production de petites salves permet de produire une succession de petites quantités d'eau chaude et ainsi d'avoir un écoulement proche d'un écoulement continu.

De préférence, les moyens de chauffe sont formés par deux éléments chauffants.

Cette disposition permet d'obtenir une solution particulièrement économique pour produire deux puissances de chauffe, les moyens de commande pouvant être très simples.

Avantageusement, les deux éléments chauffants sont formés par deux résistances électriques sérigraphiées.

Cette disposition permet d'obtenir des éléments chauffants de faible inertie thermique et ainsi, d'avoir une mise en chauffe très rapide de la chaudière aussi bien en mode eau chaude qu'en mode vapeur.

De préférence, dans un premier mode d'alimentation électrique, les moyens de commande alimentent les éléments chauffants en parallèle pour produire de l'eau chaude.

Cette disposition permet d'obtenir une puissance de chauffe importante en utilisant les deux éléments chauffants qui couvrent la surface de la paroi verticale de la chaudière. On obtient ainsi une production rapide et importante d'eau chaude.

Avantageusement, dans un second mode d'alimentation électrique, les moyens de commande alimentent les éléments chauffants en série pour produire de la vapeur.

Cette disposition permet d'obtenir une puissance de chauffe faible en utilisant les deux éléments chauffants qui couvrent la surface de la paroi verticale de la chaudière. On obtient ainsi une surface d'échange importante avec l'eau pour produire rapidement puis de manière continue une grande quantité de vapeur.

De préférence, la chambre d'ébullition comporte un plafond et la chaudière comporte un clapet anti-retour sur l'alimentation en eau, un tube ascendant d'évacuation de l'eau chauffée dont l'extrémité inférieure est disposée à proximité du fond de la chambre d'ébullition, le tube ascendant présentant dans la chambre d'ébullition à proximité du plafond de ladite chambre une ouverture.

Cette disposition permet d'obtenir une chaudière alimentée par gravité très économique.

Avantageusement, la sortie de la chambre comporte au moins un clapet anti retour.

Dans le mode eau chaude, après l'expulsion de l'eau chauffée contenue dans la chambre, une dépression se crée dans la chambre. Le clapet anti retour sur la sortie de la chambre se ferme et le remplissage se fait de manière très rapide uniquement par les clapets d'entrée. Ainsi, on peut enchainer les cycles de production d'eau chaude sans couper l'alimentation des éléments chauffants lors du remplissage de la chaudière. Cette disposition permet d'éviter les problèmes normatifs liés aux cycles alimentation- coupure successifs.

L'invention concerne également un appareil électroménager comportant une chaudière telle que précédemment décrite.

De préférence, l'appareil est un appareil de préparation culinaire ou de boissons, prévu notamment pour la réalisation de laits végétaux, comportant des moyens de pilotage qui permettent dans le cycle de préparation de l'aliment, d'avoir une étape d'injection d'eau chaude et/ou une étape d'injection de vapeur.

Cette disposition permet d'obtenir deux modes distincts d'apport d'énergie avec l'eau : un en phase liquide pour permettre, par exemple, de diluer et un en phase vapeur pour permettre, par exemple, de cuire ou réchauffer.

Avantageusement, l'appareil comporte des moyens de broyage et d'extraction d'un aliment disposé dans un récipient recevant le jus ou l'extrait de l'aliment broyé, le récipient étant relié à la sortie de la chaudière pour l'injection de l'eau chaude ou de la vapeur.

Cette disposition permet, pour la préparation de laits végétaux, l'injection d'eau chaude lors du broyage des graines et ensuite, l'injection de vapeur pour cuire le jus dans un même récipient. La cuisson du lait à la vapeur est bien adaptée car il n'y a aucun élément chauffant en contact avec le lait sur lequel le lait peut attacher.

De préférence, le récipient comporte un fond et une ouverture pour l'injection de l'eau chaude ou de la vapeur et l'ouverture est disposée à proximité du fond du récipient.

Cette disposition permet en injectant directement la vapeur dans le lait à cuire d'améliorer l'échange thermique en créant un brassage entre la vapeur et le liquide.

L'invention sera mieux comprise à l'étude des modes de réalisation pris à titre nullement limitatif et illustrés dans les figures annexées dans lesquelles :
- La figure 1 illustre une vue en perspective d'une chaudière selon un mode particulier de réalisation de l'invention.
- La figure 2 illustre une vue en coupe de la chaudière illustrée sur la figure 1.
- La figure 3 illustre une vue en développé à plat des moyens de chauffe de la chaudière illustrée sur la figure 1.
- La figure 4 illustre une vue en perspective d'un appareil de préparation culinaire ou de boissons comprenant la chaudière illustrée sur la figure 1.
- La figure 5 est une vue en coupe verticale partielle de l'appareil illustré sur la figure 4.

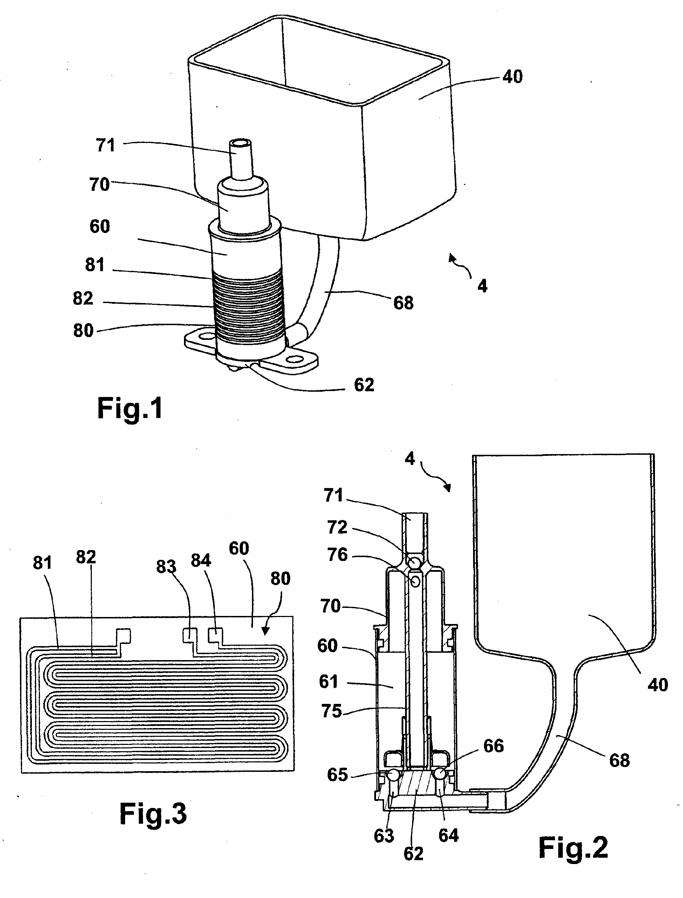

Dans l'exemple de réalisation représenté aux figures 1 et 2, une chaudière 4 comporte un corps 60 cylindrique à axe vertical qui définit une chambre 61 d'ébullition et qui présente, à son extrémité inférieure, un bouchon inférieur 62 dans lequel deux entrées 63, 64 sont pratiquées pour l'introduction d'eau dans la chambre 61, le corps 60 comportant des moyens de chauffe 80 électriques comprenant deux éléments chauffants 81, 82 à résistance sérigraphiée pour chauffer l'eau admise dans la chambre 61. Le corps 60 cylindrique présente, à son extrémité supérieure, un bouchon supérieur 70 dans lequel une sortie 71 est pratiquée pour l'extraction de l'eau chaude ou de la vapeur formée dans la chambre 61.

La chambre 61 comporte un tube ascendant 75 d'évacuation de l'eau chauffée dont l'extrémité supérieure est alignée avec la sortie 71 et est solidaire du bouchon supérieur 70 formant le plafond de la chambre 61. L'extrémité supérieure du tube ascendant 75 comporte une ouverture 76 établissant une communication entre l'intérieur du tube ascendant 75 et la chambre 61. L'extrémité inférieure du tube ascendant 75 est disposée à proximité du bouchon inférieur 62.

La chambre 61 est alimentée en eau par gravité depuis un réservoir 40 par l'intermédiaire d'une canalisation 68. Pour ce faire, le niveau bas du réservoir 40 est situé au dessus de la partie chauffante de la chambre 61.

Les entrées 63, 64 pratiquées dans le bouchon inférieur 62 comportent chacune un clapet anti-retour 65, 66 à bille destiné à empêcher un retour de l'eau chaude ou de la vapeur dans le réservoir 40.

La sortie 71 pratiquée dans le bouchon supérieur 70 comporte également un clapet anti retour 72 à bille pour favoriser le remplissage de la chambre 61.

La figure 3 représente le corps 60 cylindrique que l'on a développé à plat avec les moyens de chauffe 80. Les deux éléments chauffants 81, 82 à résistance sérigraphiée sont réalisés sous la forme de deux pistes sérigraphiées imbriquées qui s'étendent sur la hauteur de la paroi verticale du corps 60 cylindrique. Les pistes sérigraphiées sont disposées sur un support isolant électriquement, par exemple une couche de matériau émaillé. Les pistes sérigraphiées présentent des plots de connexion 83, 84 à des moyens de commande (non représentés sur les figures).

Dans un premier mode d'alimentation électrique, les moyens de commande alimentent les éléments chauffants 81, 82 en parallèle pour produire de l'eau chaude.

Dans un second mode d'alimentation électrique, les moyens de commande alimentent les éléments chauffants 81, 82 en série pour produire de la vapeur. Les moyens de commande comportent une carte électronique munie d'un micro contrôleur et de relais permettant de gérer les changements d'alimentation électrique des éléments chauffants 81, 82.

A titre d'exemple, les deux éléments chauffants 81, 82 sont sensiblement identiques et ont chacun une puissance de 1000 W sous 230 V. Lorsque les éléments chauffants 81, 82 sont alimentés en parallèle, on obtient une puissance de chauffe de 2000 W en mode eau chaude. Lorsque les éléments chauffants 81, 82 sont alimentés en série, on obtient une puissance de chauffe de 500 W en mode vapeur. La puissance de chauffe en mode vapeur est inférieure à la puissance de chauffe en mode eau chaude.

La chaudière 4 comporte des moyens de régulation thermique du type thermostat qui coupent l'alimentation électrique lorsque la température du corps 60 dépasse une température de consigne et des moyens de sécurité thermique du type fusible (non représentés sur les figures)

Le bouchon supérieur comporte une excroissance s'étendant vers l'extérieur de la chambre permettant d'admettre dans la chambre un volume d'eau supérieur au volume de la chambre. Dans une variante de réalisation, le bouchon inférieur comporte également une excroissance vers l'extérieur de la chambre.

Dans une autre variante de réalisation les bouchons inférieur et supérieur comportent respectivement une excroissance vers l'intérieur de la chambre permettant d'admettre dans la chambre un volume d'eau inférieur au volume de la chambre.

Ainsi, le volume de chaque salve d'eau chaude peut être déterminé par la taille des excroissances des bouchons.

En fonctionnement, l'utilisateur remplit le réservoir 40 avec l'eau nécessaire à sa préparation. L'eau va entrer dans la chambre 61 par les entrées 63, 64 à travers les clapets anti retour 65, 66 à bille. Le niveau de l'eau monte jusqu'à l'extrémité inférieure du tube ascendant 75. Pour progresser, l'eau va chasser l'air contenu dans la chambre 61 par l'ouverture 76 puis par la sortie 71 pratiquée dans le bouchon supérieur 70 jusqu'à ce que le niveau d'eau dans le réservoir 40 s'équilibre avec le niveau de l'eau dans la chambre 61.

Dans le mode de production d'eau chaude, les moyens de commande alimentent les éléments chauffants 81, 82 en parallèle pour fournir une puissance de chauffe importante. L'eau contenue dans la chambre 61 est portée à ébullition et d'une manière soudaine, une grande quantité de vapeur est produite. L'ouverture 76 est dimensionnée pour qu'uniquement une partie de la vapeur produite puisse s'échapper, l'autre partie créant une pression qui propulse la quasi-totalité de l'eau chaude dans le tube ascendant 75 à travers le clapet anti retour 72. La vapeur résiduelle dans la chambre se condense alors très rapidement sur les parties froides, provoquant une dépression qui ferme le clapet anti retour 72 et aspire l'eau du réservoir 40 dans la chambre 61 à travers les clapets anti retour 65, 66. Le remplissage étant très rapide, la chauffe est maintenue pendant cette phase sans risque de surchauffe des éléments chauffants 81, 82 pour démarrer ainsi un nouveau cycle de production d'eau chaude. Une fois la quantité d'eau chaude produite atteinte, les moyens de commande coupent l'alimentation électrique des éléments chauffants 81, 82.

Dans le mode production de vapeur, les moyens de commande alimentent les éléments chauffants 81, 82 en série pour fournir une puissance de chauffe réduite. L'eau contenue dans la chambre 61 est portée à ébullition pour produire une quantité de vapeur qui va s'échapper par l'ouverture 76 en ne créant qu'une très légère surpression pour fermer les clapets anti retour 65, 66. La production de vapeur va faire baisser le niveau de l'eau dans la chambre 61 jusqu'à ce que la pression de la colonne d'eau contenue dans le réservoir 40 permette le remplissage de la chambre à travers les clapets anti retour 65, 66. Pour faciliter ce remplissage, les moyens de commande peuvent couper pendent une durée donnée l'alimentation électrique des éléments chauffants 81, 82. Une fois la quantité de vapeur produite atteinte, les moyens de commande coupent l'alimentation électrique des éléments chauffants 81, 82.

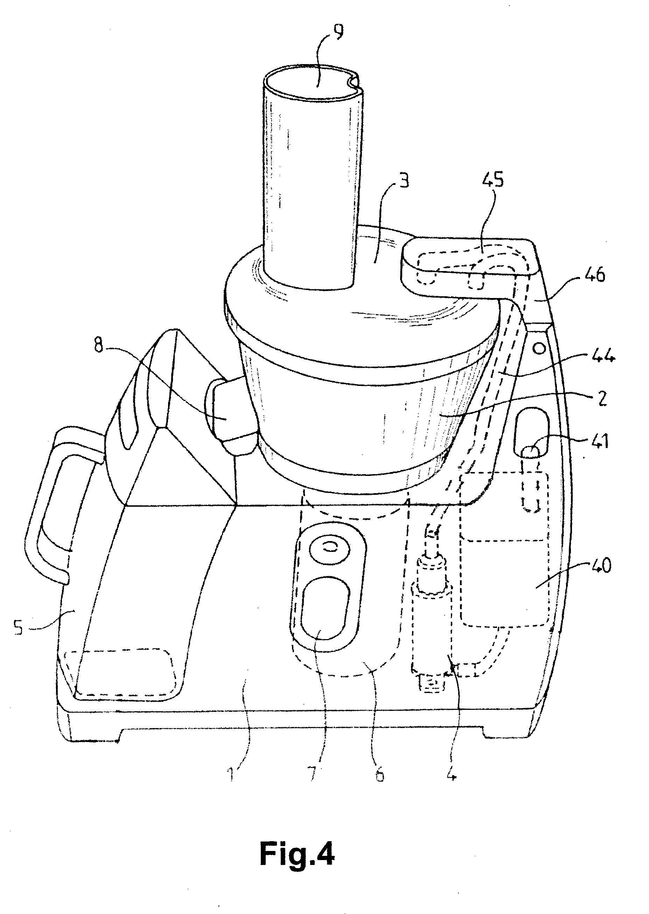

L'appareil de préparation culinaire illustré sur les figures 4 à 5 est un appareil pour la préparation de lait de soja. L'appareil comporte un boîtier 1, un récipient 2 de travail agencé sur le boîtier 1, un couvercle 3 disposé sur le récipient 2 de travail, la chaudière 4 de production d'eau chaude et de vapeur telle que décrite ci dessus, et un réceptacle à jus 5 amovible. Un moteur 6 est agencé dans le boîtier 1. L'appareil comporte également des moyens de pilotage 7.

Le récipient 2 de travail est monté amovible sur le boîtier 1 et est de préférence verrouillé sur le boîtier 1. Le récipient 2 de travail comporte une sortie d'écoulement de jus 8 comportant un robinet de service (non représenté sur les figures) qui permet à l'utilisateur de transférer le jus vers le réceptacle à jus 5. Le couvercle 3 comporte une goulotte 9 prévue pour l'introduction des ingrédients, notamment pour l'introduction des graines de soja. Si désiré, un poussoir (non représenté sur les figures) peut être inséré dans la goulotte 9.

Le réservoir 40 d'eau de la chaudière 4 de production d'eau chaude et de vapeur est susceptible d'être rempli par une ouverture de remplissage 41. La sortie d'eau chaude et de vapeur de la chaudière est reliée au couvercle 3 du récipient 2 de travail par un conduit ascendant 44 terminé par une tête de distribution 45. La tête de distribution est agencée dans un élément 46 monté pivotant sur le boîtier 1.

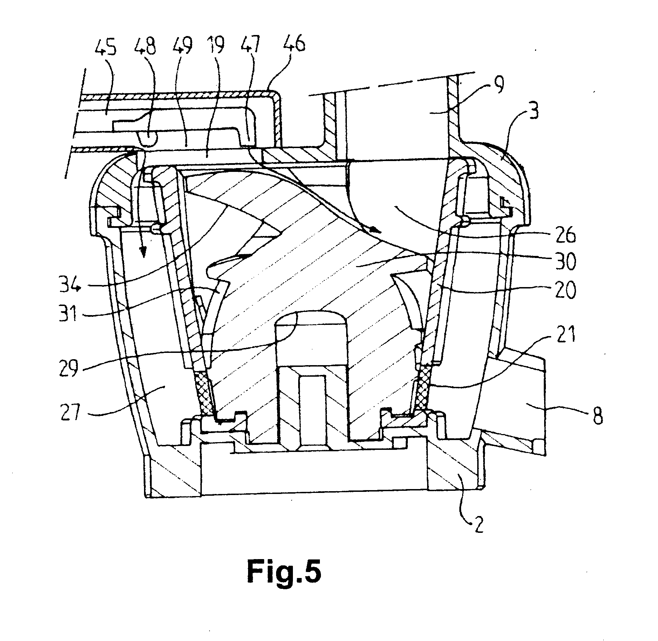

Comme on peut le voir à la figure 5, le récipient 2 de travail reçoit des moyens de broyage et d'extraction comprenant un élément de filtration 20 muni d'une partie filtrante 21, une vis de pressage 30 prévue pour être disposée dans l'élément de filtration 20. La vis de pressage 30 comporte un moyeu central 31 présentant une section augmentant d'une extrémité supérieure en direction d'une extrémité inférieure. Au moins un filet incliné 34 s'étend sur une partie de la périphérie du moyeu central 31. La vis de pressage 30 présente un organe d'entraînement inférieur 29 prévu pour être entraîné en rotation par un moyen de transmission (non représenté) relié au moteur 6. L'élément de filtration 20 divise le récipient 2 de travail en une première partie 26 logeant la vis de pressage 30 et une deuxième partie 27.

La tête de distribution 45 présente une ouverture d'écoulement 47 agencée en regard d'une échancrure inférieure 49 ménagée dans l'élément 46. L'ouverture d'écoulement 47 est disposée au dessus du passage 19 ménagé dans le couvercle 3. Ainsi l'eau chaude ou la vapeur débouche dans la première partie 26 recevant les ingrédients tels que notamment les graines de soja.

La tête de distribution 45 présente une autre ouverture d'écoulement 48 également agencée en regard de l'échancrure inférieure 49 ménagée dans l'élément 46. L'autre ouverture d'écoulement 48 est disposée au dessus du passage 19 ménagé dans le couvercle 3. Ainsi l'eau chaude ou la vapeur débouche dans la deuxième partie 27 pour se mélanger ou pour cuire le jus issu du pressage des ingrédients.

Plus particulièrement, tel que représenté sur la figure 5, l'autre ouverture d'écoulement 48 est disposée de manière diamétralement opposée à la sortie d'écoulement de jus 8. Ainsi la chaudière 4 débouche à l'opposé de la sortie d'écoulement de jus 8 par rapport à la vis de pressage 30.

Dans une variante non illustrée par les figures, le conduit ascendant 44 est relié au récipient 2 de travail et débouche à proximité du fond du récipient 2.

L'appareil fonctionne et s'utilise de la manière suivante.

Pour réaliser du lait de soja prêt à consommer, l'utilisateur remplit d'eau le réservoir 40 d'eau et verse des graines de soja pré-trempées dans le récipient 2 de travail par la goulotte 9. Les graines de soja arrivant dans la première partie 26 du récipient 2 de travail descendent dans l'élément de filtration 20 sur le filet incliné 34 de la vis de pressage 30 et sont pressées. Les moyens de pilotage commandent la chaudière 4 pour la production d'eau chaude qui s'écoule dans la première partie 26 par l'ouverture d'écoulement 47. La rotation de la vis de pressage 30 permet l'extraction du lait de soja dans la deuxième partie 27 du récipient 2 de travail. L'eau chaude issue de la chaudière 4 s'écoule dans la deuxième partie 27 par l'autre ouverture d'écoulement 48 et se mélange avec le lait de soja extrait.

Une fois l'extraction du lait de soja terminée, les moyens de pilotage commandent la chaudière 4 pour la production de vapeur qui est introduite par les ouvertures d'écoulement 47, 48.

L'utilisateur ouvre alors le robinet et le lait de soja s'écoule par la sortie d'écoulement de jus 8 dans le réceptacle à jus 5 pour le service.

Des essais ont montré qu'un litre environ de lait de soja cuit pouvait être obtenu en 12 minutes en utilisant un litre d'eau chauffée à au moins 70°C et 90 grammes de graines de soja pré-trempées.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, les moyens de chauffe de la chaudière comportent un élément chauffant et les moyens de commandes pilotent la puissance de l'élément chauffant, par exemple en hachant le courant d'alimentation, pour fournir le mode production d'eau chaude et le mode production de vapeur.

Ainsi, dans une autre variante de réalisation, les moyens de chauffe sont formés par deux résistances sérigraphiées de puissances différentes, la plus puissante étant alimentée dans le mode eau chaude et la moins puissante étant alimentée dans le mode vapeur.

Ainsi, dans une variante de réalisation, les moyens de broyage et d'extraction comportent un outil rotatif coupant et un filtre.

## Revendications

1. Chaudière (4) pour appareil électroménager comportant une chambre (61) d'ébullition associée à des moyens de chauffe (80), des moyens de commande desdits moyens de chauffe (80) et une sortie (71), les moyens de commande pilotant les moyens de chauffe (80) selon un premier mode de fonctionnement pour fournir majoritairement de l'eau chaude à la sortie (71) de la chaudière (4) et selon un deuxième mode de fonctionnement pour fournir majoritairement de la vapeur à la sortie (71) de la chaudière (4), caractérisée en ce la chambre (61) est alimentée en eau par gravité à partir d'un réservoir (40), en ce que la chambre (61) d'ébullition comporte un plafond et en ce que ladite chaudière (4) comporte un clapet anti-retour (65, 66) sur l'alimentation en eau, un tube ascendant (75) d'évacuation de l'eau chauffée dont l'extrémité inférieure est disposée à proximité du fond de la chambre d'ébullition, ledit tube ascendant (75) présentant dans la chambre (61) d'ébullition à proximité du plafond de ladite chambre (61) une ouverture (76).

2. Chaudière (4) selon la revendication 1, **caractérisée en ce que** la chambre (61) d'ébullition comprend un fond et une paroi verticale dont la surface est supérieure à la surface du fond de la chambre et **en ce que** les moyens de chauffe (80) sont rapportés sur ladite paroi verticale.

3. Chaudière (4) selon l'une quelconque des revendications 1 à 2, **caractérisée en ce que** les moyens de chauffe (80) sont formés par deux éléments chauffants (81, 82).

4. Chaudière (4) selon la revendication 3, **caractérisée en ce que** les deux éléments chauffants (81, 82) sont formés par deux résistances électriques sérigraphiées.

5. Chaudière (4) selon l'une quelconque des revendications 3 à 4, **caractérisée en ce que** dans un premier mode d'alimentation électrique, les moyens de commande alimentent les éléments chauffants (81, 82) en parallèle pour produire de l'eau chaude.

6. Chaudière (4) selon l'une quelconque des revendications 3 à 5, **caractérisée en ce que** dans un second mode d'alimentation électrique, les moyens de commande alimentent les éléments chauffants (81, 82) en série pour produire de la vapeur.

7. Chaudière (4) selon l'une quelconque des revendications 1 à 6, **caractérisée en ce que** la sortie (71) de la chambre comporte au moins un clapet anti retour (72).

8. Appareil électroménager comportant une chaudière (4) conforme à l'une des revendications 1 à 7.

9. Appareil électroménager selon la revendication 8, **caractérisé en ce qu'**il est un appareil de préparation culinaire ou de boissons, prévu notamment pour la réalisation de laits végétaux, comportant des moyens de pilotage (7) qui permettent dans le cycle de préparation de l'aliment, d'avoir une étape d'injection d'eau chaude et/ou une étape d'injection de vapeur.

10. Appareil électroménager selon la revendication 9, **caractérisé en ce que** ledit appareil comporte des moyens de broyage et d'extraction d'un aliment disposé dans un récipient (2) recevant le jus ou l'extrait de l'aliment broyé, ledit récipient (2) étant relié à la sortie (71) de la chaudière pour l'injection de l'eau chaude ou de la vapeur.

11. Appareil électroménager selon la revendication 10, **caractérisé en ce que** le récipient (2) comporte un fond et une ouverture pour l'injection de l'eau chaude ou de la vapeur et **en ce que** l'ouverture est disposée à proximité du fond du récipient.

## Patentansprüche

1. Erhitzer (4) für Elektrohaushaltsgerät mit einer Brühkammer (61), die mit Erhitzungsmitteln (80), mit Mitteln zur Steuerung dieser Erhitzungsmittel (80) und einem Ausgang (71) verbunden sind, wobei die Steuereinrichtung für die Erhitzungsmittel (80) entsprechend einer ersten Betriebsart am Ausgang (71) des Erhitzers (4) überwiegend heißes Wasser und entsprechend einer zweiten Betriebsart am Ausgang (71) des Erhitzers (4) überwiegend Dampf liefert, **dadurch gekennzeichnet, dass** die Brühkammer (61) durch die Schwerkraft von einem Tank (40) aus mit Wasser gespeist wird, dass die Brühkammer (61) eine Decke hat und der Erhitzer (4) auf der Wasserzuführung ein Rückschlagventil (65, 66) sowie ein aufsteigendes Abflussrohr (75) für das erhitzte Wasser umfasst, dessen unteres Ende in der Nähe des Bodens der Brühkammer angebracht ist, wobei das aufsteigende Abflussrohr (75) in der Brühkammer (61) in der Nähe der Decke der Brühkammer (61) eine Öffnung (76) aufweist.

2. Erhitzer (4) nach Anspruch 1, **dadurch gekennzeichnet, dass** die Brühkammer (61) einen Boden und eine senkrechte Wand aufweist, deren Oberfläche größer ist als die des Bodens der Kammer, und die Erhitzungsmittel (80) an der senkrechten Wand angebracht sind.

3. Erhitzer (4) nach einem der Ansprüche 1 bis 2, **dadurch gekennzeichnet, dass** die Erhitzungsmittel (80) aus zwei Heizelementen (81, 82) gebildet werden.

4. Erhitzer (4) nach Anspruch 3, **dadurch gekennzeichnet, dass** die beiden Heizelemente (81, 82) aus zwei elektrischen Widerständen mit Siebdruck bestehen.

5. Erhitzer (4) nach einem der Ansprüche 3 bis 4, **dadurch gekennzeichnet, dass** bei einer ersten Stromversorgungsart die Steuereinrichtung den parallel geschalteten Heizelementen (81, 82) Strom zuführt, um heißes Wasser zu erzeugen.

6. Erhitzer (4) nach einem der Ansprüche 3 bis 5, **dadurch gekennzeichnet, dass** bei einer zweiten Stromversorgungsart die Steuereinrichtung den in Reihe geschalteten Heizelementen (81, 82) Strom zuführt, um Dampf zu erzeugen.

7. Erhitzer (4) nach einem der Ansprüche 1 bis 6, **dadurch gekennzeichnet, dass** der Ausgang (71) der Brühkammer wenigstens ein Rückschlagventil (72) umfasst.

8. Elektrohaushaltsgerät mit einem Erhitzer (4) nach einem der Ansprüche 1 bis 7.

9. Elektrohaushaltsgerät nach Anspruch 8, **dadurch gekennzeichnet, dass** es sich um ein Gerät zur Zubereitung von Speisen oder Getränken handelt, das insbesondere zur Herstellung von pflanzlicher Milch vorgesehen ist, und Steuerungsmittel (7) umfasst, die innerhalb des Zubereitungszyklus des betreffenden Nahrungsmittels eine Phase der Heißwassereinspritzung und/oder eine Phase der Dampfeinspritzung ermöglichen.

10. Elektrohaushaltsgerät nach Anspruch 9, **dadurch gekennzeichnet, dass** das Gerät Mittel zum Zerkleinern und Extrahieren eines in einem Behälter (2) befindlichen Nahrungsmittels umfasst, wobei der Behälter den Saft oder den Extrakt aus dem zerkleinerten Nahrungsmittel aufnimmt und der Behälter (2) zum Zweck der Einspritzung von Heißwasser oder Dampf mit dem Ausgang (71) des Erhitzers verbunden ist.

11. Elektrohaushaltsgerät nach Anspruch 10, **dadurch gekennzeichnet, dass** der Behälter (2) einen Boden und eine Öffnung zur Einspritzung von Heißwasser oder Dampf umfasst und die Öffnung sich in der Nähe des Behälterbodens befindet.

## Claims

1. Boiler (4) for household electrical appliance having a boiling chamber (61) associated with heating means (80), means for controlling said heating means (80) and an outlet (71), the means controlling the heating means (80) according to a first mode of operation to provide mostly hot water at the outlet (71) of the boiler (4) and according to a second mode of operation to provide mostly steam at the outlet (71) of the boiler (4), **characterised in that** the chamber (61) is supplied with water by gravity from a tank (40), **in that** the boiling chamber (61) comprises a ceiling and **in that** said boiler (4) comprises a non-return valve (65, 66) on the water supply, a riser pipe (75) for evacuating heated water, whose lower end is arranged near the bottom of the boiling chamber, said riser pipe (75) having an opening (76) in the boiling chamber (61) near the ceiling of said chamber (61).

2. Boiler (4) according to claim 1, **characterised in that** the boiling chamber (61) comprises a bottom and a vertical wall whose area is greater than the area of the bottom of the chamber and **in that** the heating means (80) are attached to said vertical wall.

3. Boiler (4) according to claim 1 or 2, **characterised in that** the heating means (80) consist of two heating elements (81, 82).

4. Boiler (4) according to claim 3, **characterised in that** the two heating elements (81, 82) consist of two screen-printed electrical elements.

5. Boiler (4) according to claim 3 or 4, **characterised in that** in a first power supply mode, the control means power the heating elements (81, 82) in parallel to produce hot water.

6. Boiler (4) according to one of claims 3 to 5, **characterised in that** in a second power supply mode, the control means power the heating elements (81, 82) in series to produce steam.

7. Boiler (4) according to any of claims 1 to 6, **characterised in that** the outlet (71) of the chamber comprises at least one non-return valve (72).

8. Household electrical appliance comprising a boiler (4) according to one of claims 1 to 7.

9. Household electrical appliance according to claim 8, **characterised in that** it is a food or beverage preparation appliance, intended especially for the production of vegetable milks, comprising control means (7) which allow the possibility of including a hot water and/or steam injection step in the food preparation cycle.

10. Household electrical appliance according to claim 9, **characterised in that** said appliance comprises means for grinding and extracting a food placed in a receptacle (2) receiving the juice or extract of the ground food, said receptacle (2) being connected to the outlet (71) of the boiler for injection of hot water or steam.

11. Household electrical appliance according to claim 10, **characterised in that** the receptacle (2) comprises a bottom and an opening for injection of hot water or steam and **in that** the opening is arranged near the bottom of the receptacle.
